# EUROPÄISCHE PATENTSCHRIFT

(11) **EP 0 417 613 B1**
(45) Veröffentlichungstag und Bekanntmachung des Hinweises auf die Patenterteilung: **03.03.1993**
(21) Anmeldenummer: 90117026.6
(22) Anmeldetag: 05.09.1990
(51) Int. Cl.: B23B 31/02, B23Q 3/00, B23B 31/00

(54) **Vorrichtung zum Kuppeln von zwei Werkzeugteilen maschineller Werkzeuge**
Device for coupling two parts of machine tools
Dispositif pour le couplage des deux pièces de machines-outils

(30) Priorität: 11.09.1989 DE 3930245
(43) Veröffentlichungstag der Anmeldung: 20.03.1991
(73) Patentinhaber: ZETTL GMBH CNC PRÄZISIONS- UND SONDERWERKZEUGE, 87463 Dietmannsried (DE)
(72) Erfinder: Zettl, Otto, D-8969 Dietmannsried-Reicholzried (DE)
(74) Vertreter: Hübner, Hans-Joachim, Dipl.-Ing.

(56) Entgegenhaltungen:
- CH-A- 261 685
- DE-A- 2 241 608
- DE-A- 2 608 870
- DE-C- 415 343

## Beschreibung

Die Erfindung betrifft eine Vorrichtung zum Kuppeln eines, einen Paßbolzen mit zu diesem rechtwinkliger Ringfläche aufweisenden Werkzeugteils mit einem, eine Paßbohrung und diese umgebende ringförmige Stirnfläche ausweisenden zweiten Werkzeugteil mittels eines offenendigen Spannringes, an dessen Enden jeweils ein Widerlager angreift, wobei der Spannring in einer Ringnut der Paßbohrung radial verstellbar aufgenommen ist, sich mittels einer, an einer Seite des Spannringes angrenzenden Stützfläche an. einer Seitenfläche der Ringnut abstützt und in der Kupplungsstellung mit einer, an der gegenüberliegenden Seite des Spannringes angeordneten, auf kleinerem Durchmesser als die Stützfläche liegenden ringförmigen Klemmfläche auf eine Ringschulter des Paßbolzens eine axiale Kupplungskraft ausübt, wenn der Spannring in seinem Durchmesser dadurch verkleinert wird, daß ein Widerlager im wesentlichen in tangentialer Richtung relativ zum anderen Widerlager mittels eines Betätigungsorgans verstellt wird.

Aus der US-A-4 854764 ist eine solche Kupplungseinrichtung bekannt. Bei ihr findet eine doppelte Weguntersetzung statt, denn der Umfangs-Betätigungsweg muß in einen radialen Stellweg und dieser wiederum in einen axialen Spannhub umgesetzt werden. Bei der bekannten Kupplungsvorrichtung wird z.B. eine tangentiale Schraube als Betätigungsorgan vorgeschlagen. Diese Schraube muß bei konventioneller Steigung mehrere Volldrehungen ausführen, um die beiden Werkzeugteile zu kuppeln.

Die US-A-4215961 zeigt eine ähnliche Kupplungsvorrichtung, ohne daß hier jedoch ein axialer Spannhub erzwungen wird. Diese weitere Vorrichtung dient vielmehr dazu, den Kragen eines Dornes einer Frässpindel in einem Gehäuse in beliebigen Axialstellungen festzuspannen. Zu diesem Zweck werden zwei Spannringteile jeweils mit ihren einen Enden am Gehäuse festgelegt und mit ihren beiden anderen Enden durch eine tangentiale Schraube in Umfangsrichtung gespannt bzw. entspannt.

Die SU-A 1302037 beschreibt eine Spannvorrichtung, die einen Spannring mit einander überlappenden Enden umfaßt. Die beiden Enden weisen Löcher auf, in die eine Exzenterscheibe einer Betätigungseinrichtung eingreift. Durch Drehen der Exzenterscheibe wird der Spannring je nach Drehrichtung im Durchmesser verkleinert oder vergrößert.

Aufgabe der Erfindung ist es, die Kupplungsvorrichtung der eingangs genannten Art dahingehend weiter auszubilden, daß für einen vorgegebenen Spannhub ein möglichst geringer tangentialer Betätigungsweg erforderlich ist.

Diese Aufgabe wird bei einer Kupplungsvorrichtung der eingangs genannten Art dadurch gelöst, daß die Seitenfläche der Ringnut, an der sich der Spannring mittels seiner Stützfläche abstützt, konisch ausgebildet ist, so daß eine Radialbewegung des Spannringes gleichzeitig einen axialen Spannhub des Spannringes bewirkt.

Die Erfindung bringt den Vorteil, daß jede Radialbewegung des Spannringes von einer entsprechenden Axialbewegung begleitet ist.

Vorteilhafte Ausgestaltungen der Erfindung bilden die Gegenstände der Unteransprüche, Die beiden Werkzeugteile werden in herkömmlicher Weise durch Paßbolzen und Paßbohrung miteinander ausgerichtet, Der Paßbolzen kann am Werkzeugträger aber auch am Werkzeughalter angeordnet sein. Der Spannring mit Betätigungseinrichtung ist dem jeweils anderen Werkzeugteil zugeordnet.

Die Zeichnung veranschaulicht Ausführungsbeispiele der Erfindung.

Es zeigt
FIG. 1 eine Seitenansicht eines Werkzeugträgers, der mittels eines Spannringes an einem Werkzeughalter befestigt ist,
FIG. 2 eine spiegelbildliche Darstellung der Verbindungsstelle zwis:hen beiden Werkzeugteilen, an der der linksseitige Werkzeugträger mit dem rechtsseitigen Werkzeughalter durch einen Spannring verbindbar ist,
FIG 3 eine ähnliche Ansicht wie FIG. 2, jedoch mit einer abgewandelten Ausführungsform des Spannrings, der sich in Kupplungsstellung befindet;
FIG. 4 einen Querschnitt eines Werkzeughalters mit eingebautem Spannring;
FIG. 5 einen Querschnitt einer anderen Ausführungsform einer Betätigungsrichtung für den Spannring;
FIG. 6 einen Längsschnitt längs der Linie 6-6 der FIG. 5; und
FIG. 7 einen Querschnitt einer dritten Ausführungsform der Betätigungseinrichtung.

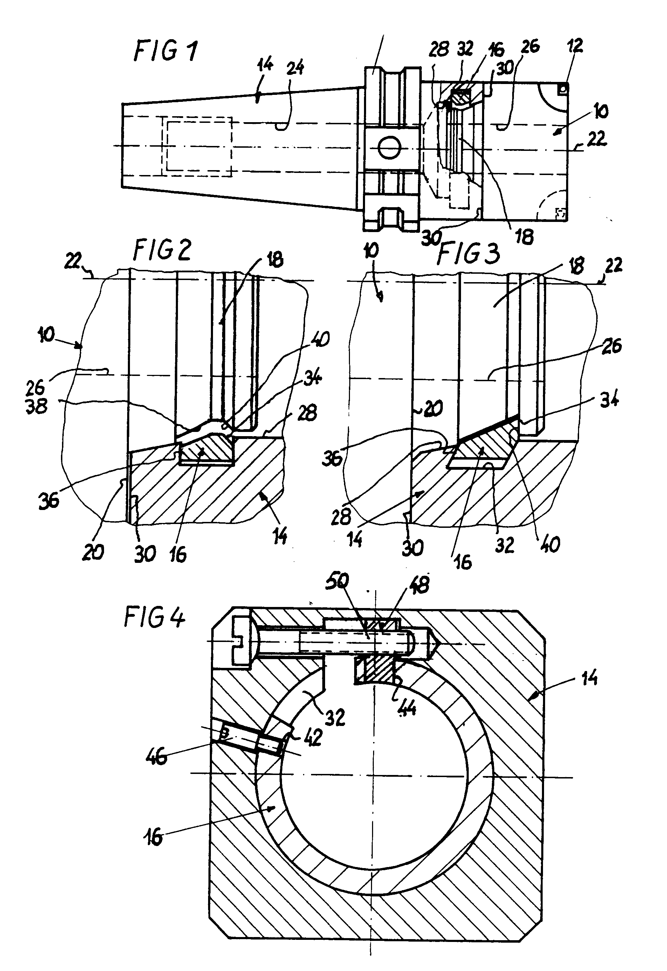

Gemäß FIG. 1 ist ein Werkzeugträger 10, der am Vorderende Werkzeuge 12 aufweist mit einem Werkzeughalter 14 mittels eines offenendigen Spannringes 16 verbunden, der in einer Ringnut 32 einer Paßbohrung 28 des Werkzeughalters 14 eingesetzt ist. Der Werkzeugträger 10 weist einen Paßbolzen 18 auf, der von einer Ringfläche 20 umgeben ist, welche sich rechtwinklig zur Achse 22 des Paßbolzens 18 erstreckt. Ein zylindrischer Axialkanal 24 erstreckt sich über die ganze Länge des Werkzeughalters 14 und mündet am Vorderende in der Paßbohrung 28, in welcher der Paßbolzen 18 aufgenommen und zentriert ist. Der Werkzeugträger 10 hat ebenfalls einen Axialkanal 26. In der Kupplungsstellung liegt eine ringförmige Stirnfläche 30 des Werkzeughalters 14 an der Ringfläche 20 des Werkzeugträgers 10 an.

Die Ringnut 32, die in die Paßbohrung 28 eingestochen ist, liegt nahe dem Vorderende des Werkzeughalters 14. Der Spannring 16 ist so in die Ringnut 32 eingesetzt, daß er in radialer Richtung verlagerbar ist, jedoch in axialer Richtung unverschiebbar gehalten ist. Der Spannring 16 hat eine ringförmige Klemmfläche 34, die sich an die rückwärtige Seitenfläche des Spannringes 16 anschließt und weiterhin eine ringförmige Stützfläche 36, die durch die vordere Seitenfläche des Spannringes gebildet ist. Die Klemmfläche 34 ist bezüglich der Stützfläche 36 radial einwärts versetzt.

Der Paßbolzen 18 des Werkzeugträgers 10 weist einen ringförmigen Einstich 38 auf, der im wesentlichen mit der Ringnut 16 axial ausgerichtet ist. Eine Ringschulter 40 erstreckt sich vom Boden des Einstiches 38 zum Außenumfang des Paßbolzens 18. Der Spannring 16 besteht aus Federstahl und füllt in seiner unverformten Entkupplungsstellung die Ringnut 32 im wesentlichen aus und steht allenfalls geringfügig in das Innere der Paßbohrung 28 vor, sodaß er das Einführen des Paßbolzens 18 nicht behindert.

Gemäß FIG. 4 haben beide Enden des Spannringes 16 Öffnungen 42, 44. Ein erstes Widerlager 46 wird durch eine Schraube gebildet, die in den Werkzeughalter 14 eingeschraubt ist und in die Öffnung 42 eingreift, um dieses Spannringende festzuhalten. Ein zweites Widerlager 48 in Form eines Gleitstückes ist auf gleiche Weise mit der Öffnung 44 des anderen Ringendes formschlüssig verbunden. In diesem Widerlager 48 ist ein Innengewinde vorgesehen, in das eine Schraube 50 verschraubbar eingreift, deren Kopf sich am Werkzeughalter 14 abstützt. Die Schraube 50 stellt die Betätigungseinrichtung dar, bei deren Betätigung das Widerlager 48 in FIG. 4 nach links gezogen wird, wodurch der Umfangsabstand zwischen beiden Enden des Spannringes 16 verringert wird. Eine Umfangsverlagerung des Widerlagers 48 um etwa 6 mm reicht aus. Der Durchmesser des Spannringes wird dabei um etwa 2 mm verringert. Die Klemmfläche 34 des Spannringes 16 verlagert sich dabei um etwa 1 mm radial nach innen und kommt mit der Ringschulter 40 des Paßbolzens 18 in Eingriff. Da die Ringschulter 40 gemäß FIG. 2 konisch ausgebildet ist, resultiert aus der Radialbewegung des Spannringes 16 ein axialer Spannhub des Paßbolzens 18 bezüglich des Werkzeughalters 14. Die Erfahrung zeigt, daß ein axialer Spannhub von einem Bruchteil eines Millimeters ausreicht, um die beiden Ringflächen 20, 30 der Werkzeugteile 10, 14 fest aneinander zu spannen.

Die Ringschulter 40 wird in FIG. 2 durch eine geneigte Gerade begrenzt. Würde man anstatt dessen diese Ringflächenkontur konvex wölben, erhielte man eine progressive Kraftübersetzung, derart, daß bei gleicher Betätigungskraft zum Verformen des Spannringes 16 eine progressiv zunehmende axiale Spannkraft erzielt wird.

Gemäß FIG. 3 sind die Seitenflächen der Ringnut 32 bezüglich der Radialrichtungen schräg nach hinten gestellt, die beiden Seitenflächen bilden also Kegelflächen. Mindestens die Stützfläche 36 des Spannringes 16 hat eine komplementäre Kegelfläche. Dank dieser Gestaltung resultiert aus jeder Radialbewegung des Spannringes 16 eine entsprechende Axialbewegung. Deswegen kann die Ringschulter 40 bei dieser Ausführungsform in einer Radialebene liegen, was auch für die Klemmfläche 34 des Spannringes 16 gilt.

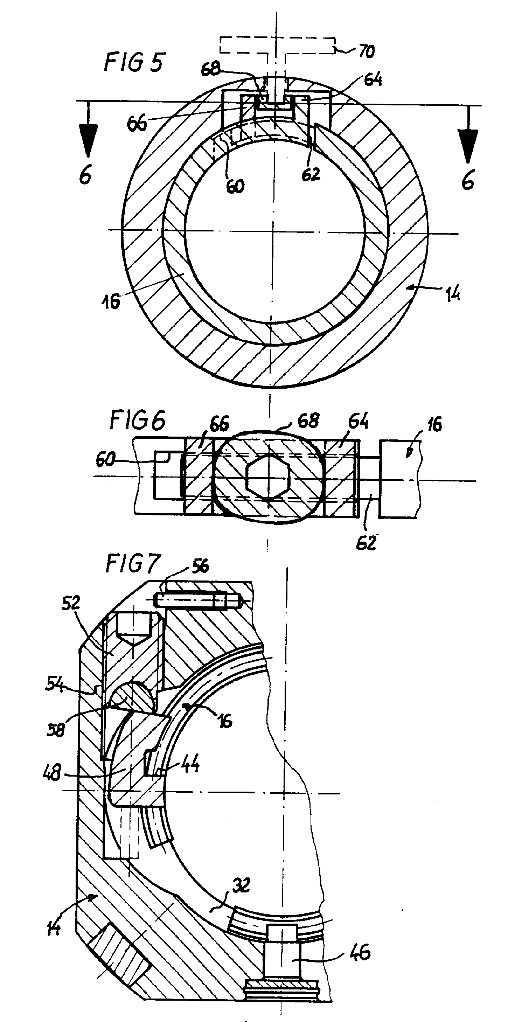

Die Ausführungsform gemäß FIG. 7 unterscheidet sich von der gemäß FIG. 4 hauptsächlich darin, daß die dort veranschaulichte Schraube 52 zwar auch im wesentlichen tangential zum Spannring 16 wirkt, jedoch in einem Innengewinde 54 des Werkzeughalters 14 verschraubbar ist und mittels eines Kugelelementes 58 auf das Widerlager 48 drückt, um den Durchmesser des Spannringes 16 zu verringern. Ein Sicherungsstift 56 hält die Schraube 52 in der Spannstellung.

Die Figuren 5 und 6 veranschlaulichen eine Betätigungseinrichtung, die sich von den beiden vorbeschriebenen hauptsächlich dadurch unterscheidet, daß der Umfangsabstand zwischen den Enden des Spannringes 16 vergrößert werden muß, um dessen Durchmesser zu verringern und weiterhin dadurch, daß beide Enden des Spannringes 16 gleichzeitig und in entgegengesetzten Richtungen verlagert werden. Ein Ende des Spann -ringes 16 hat einen Längsschlitz 60, in den eine Zunge 62 des anderen Spannringendes eingefahren ist. Beide Enden des Spannringes 16 überlappen sich also in Umfangsrichtung. Ein Widerlager 64 ist auf dem gegabelten einen Ringende aufgeschweißt und ein weiteres Widerlager 66 ist auf der Zunge am anderen Ringende angeschweißt. Eine Exzenterscheibe 68 ist im Werkzeughalter 14 zwischen den beiden Widerlagern 64, 66 drehbar gelagert. Durch eine Öffnung im Werkzeughalter 14, kann ein Schlüssel 70 eingeführt und mit der Exzenterscheibe 68 gekuppelt, um diese zu drehen, wodurch die beiden Widerlager 64, 66 auseinandergedrückt werden. Eine Drehung um 90° reicht aus, um den Spannring 16 in seine Kupplungsstellung zu bringen, in welcher die Exzenterscheibe 68 die Stellung gemäß FIG. 6 einnimmt. Das gleichzeitige Spannen beider Enden des Spannringes läßt sich auch mit einer Betätigungseinrichtung in Form einer Schraube entsprechend der Schraube 50 gemäß FIG. 4 erreichen, wenn sich der Kopf der Schraube nicht am Werkzeughalter 14 sondern am Widerlager 46 abstützt, das dann dem Widerlager 48 dicht benachbart angeordnet und diesem entsprechend ausgebildet wird, mit der einzigen Ausnahme, daß das Widerlager 46 keine Schraubverbindung mit der Schraube 50 hat.

## Patentansprüche

1. Vorrichtung zum Kuppeln eines, einen Paßbolzen (18) mit zu diesem rechtwinkliger Ringfläche (20) aufweisenden Werkzeugteils (10) mit einem, eine Paßbohrung (28) und diese umgebende ringförmige Stirnfläche (30) aufweisenden zweiten Werkzeugteil (14) mittels eines offenendigen Spannringes (16), an dessen Enden jeweils ein Widerlager (46, 48; 64, 66) angreift, wobei der Spannring (16) in einer Ringnut (32) der Paßbohrung (28) radial verstellbar aufgenommen ist, sich mittels einer, an einer Seite des Spannringes (16) angrenzenden Stützfläche (36) an einer Seitenfläche der Ringnut (32) abstützt und in der Kupplungsstellung mit einer, an der gegenüberliegenden Seite des Spannringes (16) angeordneten, auf kleinerem Durchmesser als die Stützfläche (36) liegenden ringförmigen Klemmfläche (34) auf eine Ringschulter (40) des Paßbolzens (18) eine axiale Kupplungskraft ausübt, wenn der Spannring (16) in seinem Durchmesser dadurch verkleinert wird, daß ein Widerlager (48; 66) im wesentlichen in tangentialer Richtung relativ zum anderen Widerlager (46; 64) mittels eines Betätigungsorgans (50, 52, 68) verstellt wird, dadurch gekennzeichnet, daß die Seitenfläche der Ringnut (32), an der sich der Spannring (16) mittels seiner Stützfläche (36) abstützt, konisch ausgebildet ist, so daß eine Radialbewegung des Spannringes (16) gleichzeitig einen axialen Spannhub des Spannringes (16) bewirkt.

2. Vorrichtung nach Anspruch 1, dadurch gekennzeichnet, daß die Ringnut (32) von zwei parallelen konischen Seitenflächen begrenzt ist.

3. Vorrichtung nach Anspruch 1 oder 2, dadurch gekennzeichnet, daß die Stützfläche (36) des Spannringes (16) ebenfalls konisch und komplementär zu der von ihr kontaktierten Seitenfläche der Ringnut (32) ausgebildet ist.

4. Vorrichtung nach einem der Ansprüche 1 bis 3, dadurch gekennzeichnet, daß mindestens ein Ende des Spannringes (16) eine Öffnung (42, 44) aufweist und daß mindestens ein separates Widerlager (46, 48) vorgesehen ist, das formschlüssig in diese Öffnung (42, 44) eingreift und in einer Kammer des zweiten Werkzeugteils (14) in Umfangsrichtung des Spannringes (16) verschiebbar gelagert ist, die in der Ringnut (32) mündet.

5. Vorrichtung nach einem der Ansprüche 1 bis 4, dadurch gekennzeichnet, daß das Betätigungsorgan (50, 52) aus einer Schraube besteht, die in einer, den Spannring (16) außen etwa tangierenden und in dessen Radialebene angeordneten Bohrung (54) gelagert ist und entweder mit einem Innengewinde der Bohrung (54) oder einem Innengewinde eines Widerlagers (48)des Spannringes (16) verschraubbar ist.

6. Vorrichtung nach einem der Ansprüche 1 bis 5, dadurch gekennzeichnet, daß sich der Spannring (16) über mehr als 360° erstreckt und überlappende Enden aufweist und daß das Betätigungsorgan (68) ein Druckglied umfaßt, das den Umfangsabstand zwischen zwei Widerlagern (64, 66) an den Spannringenden zur Verkleinerung des Durchmessers des Spannringes (16) vergrößert.

7. Vorrichtung nach einem der Ansprüche 1 bis 6, dadurch gekennzeichnet, daß das Betätigungsorgan (68) eine Exzenterscheibe aufweist, die in einer zum Spannring (16) etwa tangentialen Ebene drehbar gelagert ist.

8. Vorrichtung nach einem der Ansprüche 1 bis 7, dadurch gekennzeichnet, daß das Betätigungsorgan (50, 52, 68) gleichzeitig mit zwei an beid-en Enden des Spannringes (16) vorgesehenen Widerlagern (46,48,64,66) zusammenwirkt, um diese Enden in entgegengesetzter Richtung zu verschieben.

## Claims

1. A device for coupling a tool part (10), having a fitting bolt (18) with an annular surface (20) at right angles thereto, to a second tool part (14), having a fitting bore (28) and an annular end face (30) surrounding the latter, by means of an open-ended clamping ring (16) whose ends are each engaged by an abutment (46, 48; 64, 66), wherein the clamping ring (16) is radially adjustably received in an annular groove (32) of the fitting bore (28) and is supported on a side face of the annular groove (32) by means of a support surface (36) adjacent to one side of the clamping ring (16) and, when in the coupling position, exerts an axial coupling force onto an annular shoulder (40) of the fitting bolt (18) by an annular clamping surface (34), which is disposed on the opposite side of the clamping ring (16) and lies on a smaller diameter than the support surface (36), when the clamping ring (16) is reduced in diameter by adjustment of one abutment (48; 66) substantially in a tangential direction relative to the other abutment (46; 64) by means of an actuating member (50, 52, 68), characterised in that the side face of the annular groove (32), on which the clamping ring (16) is supported by means of its support surface (36), is of conical construction, so that a radial movement of the clamping ring (16) at the same time effects an axial clamping throw of the clamping ring (36).

2. A device as claimed in claim 1, characterised in that the annular groove (32) is defined by two parallel, conical side faces.

3. A device as claimed in claim 1 or 2, characterised in that the support surface (35) of the clamping ring (16) is also of conical construction and complementary to that side face of the annular groove (32) with which it is in contact.

4. A device as claimed in one of the claims 1 to 3, characterised in that at least one end of the clamping ring (16) has an opening (42, 44), and that there is provided at least one separate abutment (46, 48) which engages this opening (42, 44) in a form-locking manner and is mounted in a chamber, opening into the annular groove (32), of the second tool part (14) so as to be displaceable in the circumferential direction of the clamping ring (16).

5. A device as claimed in one of the claims 1 to 4, characterised in that the actuating member (50, 52) comprises a screw which is mounted in a bore (54) which is externally approximately tangential to the clamping ring (16) and disposed in the radial plane thereof, which screw is screwable either into an internal thread of the bore (54) or into an internal thread of an abutment (48) of the clamping ring (16).

6. A device as claimed in one of the claims 1 to 5, characterised in that the clamping ring (16) extends over more than 360° and has overlapping ends, and that the actuating member (68) comprises a thrust member which increases the circumferential distance between two abutments (64, 66) on the ends of the clamping ring in order to decrease the diameter of the clamping ring (16).

7. A device as claimed in one of the claims 1 to 6, characterised in that the actuating member (68) has an eccentric disc which is rotatably mounted in a plane approximately tangential to the clamping ring (16).

8. A device as claimed in one of the claims 1 to 7, characterised in that the actuating member (50, 52, 68) simultaneously cooperates with two abutments (46, 48, 64, 66) provided on both ends of the clamping ring (16) in order to displace these ends in opposite directions.

## Revendications

1. Dispositif pour le couplage d'un élément d'outil (10) présentant un boulon d'assemblage (18) à face annulaire (20) à angle droit par rapport à ce dernier, à un second élément d'outil (14) présentant un alésage d'assemblage (28) et une face frontale (30) annulaire entourant ce dernier, à l'aide d'une bague de serrage (16) à extrémités ouvertes, avec chacune des extrémités de laquelle vient en prise une butée (46, 48; 64, 66), la bague de serrage (16) étant reçue, de manière déplaçable radialement, dans une rainure annulaire (32) de l'alésage d'assemblage (28), s'appuyant, par une face d'appui (36) adjacente d'un côté de la bague de serrage (16), sur une face latérale de la rainure annulaire (32) et exerçant, en position de couplage, avec une face de serrage (34) annulaire disposée du côté opposé de la bague de serrage (16) et se situant sur un diamètre plus petit que la face d'appui (36), une force de couplage axiale sur un épaulement annulaire (40) du boulon d'assemblage (18) lorsque la bague de serrage (16) est réduite en diamètre du fait qu'une butée (48; 66) est déplacée, sensiblement dans un sens tangentiel à l'autre butée (46; 64), à l'aide d'un organe d'actionnement (50, 52, 68), caractérisé en ce que la face latérale de la rainure annulaire (32) sur laquelle s'appuie, par sa face d'appui (36), la bague de serrage (16) se présente de forme conique, de manière qu'un déplacement radial de la bague de serrage (16) produit simultanément une course de serrage axiale de la bague de serrage (16).

2. Dispositif suivant la revendication 1, caractérisé en ce que la rainure annulaire (32) est délimitée par deux faces latérales parallèles.

3. Dispositif suivant la revendication 1 ou 2, caractérisé en ce que la facee d'appui (36) de la bague de serrage (16) se présente également conique et complémentaire de la face latérale, avec laquelle elle vient en contact, de la rainure annulaire (32).

4. Dispositif suivant l'une des revendications 1 à 3, caractérisé en ce qu'au moins l'une des extrémités de la bague de serrage (16) présente une ouverture (42, 44) et qu'il est prévu au moins une butée séparée (46, 48) qui s'engage, en liaison de forme, dans cette ouverture (42, 44) et qui est montée, de manière déplaçable dans le sens périphérique de la bague de serrage (16), dans une chambre du second élément d'outil (14) aboutissant dans la rainure annulaire (32).

5. Dispositif suivant l'une des revendications 1 à 4, caractérisé en ce que l'organe d'actionnement (50, 52) se compose d'une vis montée dans un alésage (54) extérieurement environ tangent à la bague de serrage (16) et disposé dans le plan radial de cette dernière et pouvant être vissée soit dans un taraudage de l'alésage (54), soit dans un taraudage d'une butée (48) de la barye de serrage (16).

6. Dispositif suivant l'une des revendications 1 à 5, caractérisé en ce que la bague de serrage (16) s'étend sur plus de 360° et présente des extrémités se recouvrant et que l'organe d'actionnement (68) comporte un élément de pression qui augmente la distance périphérique entre deux butées (64, 66) aux extrémités de la bague de serrage, afin de réduire le diamètre de la barye de serrage (16).

7. Dispositif suivant l'une des revendications 1 à 6, caractérisé en ce que l'organe d'actionnement (68) présente une roue excentrique montée de manière rotative dans un plan environ tangentiel à la bague de serrage (16).

8. Dispositif suivant l'une des revendications 1 à 7, caractérisé en ce que l'organe d'actionnement (50, 52, 68) coopère simultanément avec deux butées (46, 48, 64, 66) prévues aux deux extrémités de la bague de serrage (16), afin de déplacer ces extrémités en direction opposée.
